# EUROPEAN PATENT APPLICATION

(11) **EP 2 793 201 A1**
(43) Date of publication of application: **22.10.2014**
(21) Application number: 12857831.7
(22) Date of filing: 13.12.2012
(51) Int. Cl.: G07F 19/00

(54) **SAFETY INFORMATION TRANSFER SYSTEM, DEVICE AND METHOD BASED ON EXTENDED PARAMETER SET**

(30) Priority: 15.12.2011 CN 201110420190
(71) Applicant: China Unionpay Co., Ltd, Shanghai 200135 (CN)
(72) Inventor: JIAN, Jiangtao, Shanghai 200135 (CN); WANG, Wenqiang, Shanghai 200135 (CN); CHEN, Xianqiang, Shanghai 200135 (CN); LI, Chunhuan, Shanghai 200135 (CN); XU, Jingwen, Shanghai 200135 (CN)
(74) Representative: Seemann & Partner
(86) International application number: PCT/CN2012/086594
(87) International publication number: WO 2013/087016

(57) **Abstract**

The present invention proposes a security information interaction system, device and method based on the extended parameter set. Said security information interaction system based on the extended parameter set comprises a security information interaction device and a security information interaction terminal, wherein said security information interaction device may execute the operations related to the transfer of a resource by means of performing the security information interaction with said security information interaction terminal via a communication interface based on one of a primary parameter set and the extended parameter set. The security information interaction system, device and method based on the extended parameter set disclosed in the present invention may realize the transfer operations of multiple kinds of resource having different attributes, the cost is lower, and the flexible configuration and extension can be realized according to the requirements.

## Description

### Related applications

This application is a translation of the international application PCT/CN2012/086594 filed on December 13, 2012, which in turn claims priority from the Chinese application with the official file number 201110420190.9, filed on December 15, 2011. The entire contents of both applications are incorporated herein by reference.

### Field of the Invention

The present invention relates to the security information interaction system, device and method, and more particularly, to the security information interaction system, device and method based on the extended parameter set.

### Background

Nowadays, with the increasingly widespread of the network applications and increasingly enrichment of business types of different fields, it becomes more and more important to perform the interaction of the security information (i.e., the information requiring a higher level of security) by means of a security information interaction terminal so as to complete the transfer of the resource (said resource including data information, capital, goods, and so on).

In the existing security information interaction systems and methods, the security information interaction devices (for example, Financial IC cards ) usually only use a single parameter set storage module, and complete the interaction of the security information based on the single parameter set (for example in the financial field, it may be a data element associated with a particular transaction currency code, and it associates with the resource having a specific attribute (such as the funds of certain currency)) stored in said parameter set storage module.

However, the above-mentioned existing solution has the following problems: due to there is only a single parameter set storage module, only the transfer operation of the resource associated with the specific parameter set can be performed, thus the usage field is singleness and the transfer of various resource having different attributes cannot be achieved, so the compatibility is reduced, and thereby the efficiency of the security information interaction procedure is reduced.

In addition, in the existing improved solution, multiple applications related to the transfer operation of various kinds of resource having different attributes are installed and carried in both the security information interaction devices and the security information interaction terminal, thus the transfer operation of multiple kinds of resource having different attributes is realized. However, this improved solution has the following problems: the conventional security information interaction devices and the security information interaction terminals must be reconstructed, and thus causing the cost to be increased, the flexible configuration and extension cannot be achieved along with the continuous development of business type.

Therefore, there exists the needs for providing a security information interaction system, device and method, which not only can realize the transfer operation of multiple kinds of resource having different attributes, but also the cost thereof is lower and can realize the flexible configuration and extension.

### Summary of the invention

In order to solve the problems presented in the existing technical solutions described above, the present invention proposes the security information interaction system, device and method based on the extended parameter set.

The objects of the present invention are realized through the following technical solutions:
A security information interaction system based on the extended parameter set, said security information interaction system based on the extended parameter set comprising:
   a security information interaction device for executing the operation related to the transfer of the resource by means of performing the security information interaction with a security information interaction terminal after establishing a physical connection with the security information interaction terminal; and
   a security information interaction terminal for performing said security information interaction with said security information interaction device, and completing the transfer of said resource based on the data element in one of a primary parameter set and at least one extended parameter set obtained from said security information interaction device.

In the solutions disclosed above, preferably, said security information interaction device further comprises:
a communication interface for establishing said physical connection with said security information interaction terminal;
a primary parameter set storage module for storing said primary parameter set;
an extended parameter set storage module for storing said at least one extended parameter set; and
a main controller for performing said security information interaction with said security information interaction terminal via said communication interface based on one of said primary parameter set and said extended parameter set, so as to execute the operation related to the transfer of said resource.

In the solutions disclosed above, preferably, said security information interaction device further comprises a configuration module for updating said primary parameter set and/or said at least one extended parameter set based on the received configuration command.

In the solutions disclosed above, preferably, said main controller is also used for sending a terminal data element request instruction to said security information interaction terminal via said communication interface after said communication interface has established said physical connection with said security information interaction terminal.

In the solutions disclosed above, preferably, said main controller is also used for analyzing a terminal data element request response so as to obtain at least one terminal data element related to the transfer of said resource after receiving said terminal data element request response from said security information interaction terminal via said communication interface, wherein said at least one terminal data element includes the data element associated with the attribute of said resource.

In the solutions disclosed above, preferably, said main controller is also used for matching said data element associated with the attribute of said resource with the corresponding data element in said primary parameter set read from said primary parameter set storage module, and if the both matches, then said main parameter set will be taken as the current working parameter set.

In the solutions disclosed above, preferably, said main controller is also used for matching said data element associated with the attribute of said resource with the corresponding data elements in each of at least one extended parameter set read from said extended parameter set storage module successively if said data element associated with the attribute of said resource does not match with the corresponding data element in said primary parameter set read from said primary parameter set storage module, and if there exists a matched extended parameter set, then said matched extended parameter set will be taken as the current working parameter set.

In the solutions disclosed above, preferably, said main controller is also used for sending an instruction indicating that the parameter matching operation fails to said security information interaction terminal via said communication interface when there exists no parameter set matching with said data element associated with the attribute of said resource.

In the solutions disclosed above, preferably, said main controller is also used for providing said security information interaction terminal with the data element in said current working parameter set based on the instruction from said security information interaction terminal in the subsequent security information interaction after said current working parameter set is determined.

In the solutions disclosed above, preferably, before said security information interaction device is allowed to use, said primary parameter set and said extended parameter set are initialized by the manager of said security information interaction device.

In the solutions disclosed above, preferably, said physical connection is a non-contact physical connection and/or a contact physical connection.

In the solutions disclosed above, preferably, said resource is the capital, and said data element associated with the attribute of said resource is a transaction currency code.

In the solutions disclosed above, preferably, said security information interaction device is a Financial IC card.

In the solutions disclosed above, preferably, said security information interaction terminal is a POS machine.

In the solutions disclosed above, preferably, said security information interaction terminal is further used for sending said terminal data element request response to said security information interaction device after receiving said terminal data element request instruction from said security information interaction device.

In the solutions disclosed above, preferably, said security information interaction terminal is further used for obtaining the data element from said current working parameter set by means of sending the instruction to said security information interaction device after said security information interaction device has determined said current working parameter set so as to complete the transfer of said resource.

In the solutions disclosed above, preferably, upon receiving said instruction indicating that parameter matching operation fails from said security information interaction device, said security information interaction terminal terminates the security information interaction procedure.

In the solutions disclosed above, preferably, said security information interaction terminal is capable of acquiring the data element associated with the attribute of said resource in said primary parameter set and/or said at least one extended parameter set in the manner of sending an inquiry instruction to said security information interaction device.

The objects of the present invention can also be realized through the following technical solutions:
A security information interaction device, said security information interaction device comprising:
   a communication interface for establishing a physical connection with a corresponding security information interaction terminal;
   a primary parameter set storage module for storing a primary parameter set;
   an extended parameter set storage module for storing at least one extended parameter set; and
   a main controller for performing a security information interaction with said corresponding security information interaction terminal via said communication interface based on one of said primary parameter set and said extended parameter set, so as to execute the operations related to the transfer of the resource.

In the solutions disclosed above, preferably, said security information interaction device further comprises a configuration module for updating said primary parameter set and/or said at least one extended parameter set based on the received configuration command.

In the solutions disclosed above, preferably, said main controller is also used for sending a terminal data element request instruction to said security information interaction terminal via said communication interface after said communication interface has established said physical connection with said security information interaction terminal.

In the solutions disclosed above, preferably, said main controller is also used for analyzing a terminal data element request response so as to obtain at least one terminal data element related to the transfer of said resource after receiving said terminal data element request response from said security information interaction terminal via said communication interface, wherein said at least one terminal data element includes the data element associated with the attribute of said resource.

In the solutions disclosed above, preferably, said main controller is also used for matching said data element associated with the attribute of said resource with the corresponding data element in said primary parameter set read from said primary parameter set storage module, and if the both matches, then said main parameter set will be taken as the current working parameter set.

In the solutions disclosed above, preferably, said main controller is also used for matching said data element associated with the attribute of said resource with the corresponding data elements in each of the at least one extended parameter set read from said extended parameter set storage module successively if said data element associated with the attribute of said resource does not match with the corresponding data element in said primary parameter set read from said primary parameter set storage module, and if there exists a matched extended parameter set, then said matched extended parameter set will be taken as the current working parameter set.

In the solutions disclosed above, preferably, said main controller is also used for sending an instruction indicating that parameter matching operation fails to said security information interaction terminal via said communication interface when there exists no parameter set matching with said data element associated with the attribute of said resource.

In the solutions disclosed above, preferably, said main controller is also used for providing said security information interaction terminal with the data element in said current working parameter set based on the instruction from said security information interaction terminal in the subsequent security information interaction procedure after said current working parameter set is determined.

In the solutions disclosed above, preferably, said primary parameter set and said extended parameter set are initialized by the manager of said security information interaction device.

In the solutions disclosed above, preferably, said physical connection is a non-contact physical connection or a contact physical connection.

In the solutions disclosed above, preferably, said resource is the capital, and said data element associated with the attribute of said resource is a transaction currency code.

In the solutions disclosed above, preferably, said security information interaction device is a Financial IC card.

The objects of the present invention can also be realized through the following technical solutions:
A security information interaction method based on the extended parameter set, said security information interaction method based on the extended parameter set comprising the following steps:
   (A1) establishing a physical communication channel between a security information interaction device and a security information interaction terminal; and
   (A2) said security information interaction device performing the security information interaction with said security information interaction terminal based on the data element in one of a primary parameter set and at least one extended parameter set stored in said security information interaction device over said physical communication channel, so as to complete the operations related to the transfer of the resource.

In the solutions disclosed above, preferably, said primary parameter set and/or said at least one extended parameter set are capable of being updated based on the received configuration command.

In the solutions disclosed above, preferably, before said security information interaction device is allowed to use, said primary parameter set and said extended parameter set are initialized by the manager of said security information interaction device.

In the solutions disclosed above, preferably, said security information interaction terminal is capable of acquiring the data element associated with the attribute of said resource in said primary parameter set and/or said at least one extended parameter set in the manner of sending an inquiry instruction to said security information interaction device.

The security information interaction system, device and method based on the extended parameter set disclosed in the present invention have the following advantages: the transfer operations of multiple kinds of resource having different attributes can be realized; the cost is lower; and the flexible configuration and extension can be realized according to the requirements, and thus the compatibility is higher, and the efficiency of security information interaction procedure is improved.

### Brief description of the drawings

The technical features and advantages of the present invention will be better appreciated by one skilled in the art in conjunction with the accompanying drawings, in which:
FIG. 1 is the architecture diagram of the security information interaction system based on the extended parameter set according to the embodiment of the present invention; and
FIG. 2 is the flow diagram of the security information interaction method based on the extended parameter set according to the embodiment of the present invention.

### Detailed description of the invention

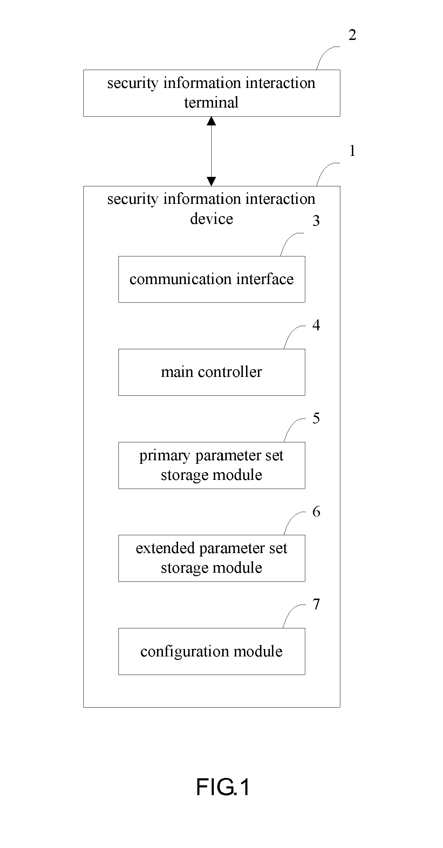

FIG. 1 is the architecture diagram of the security information interaction system based on the extended parameter set according to the embodiment of the present invention. As shown in FIG. 1, the security information interaction system based on the extended parameter set disclosed in the present invention comprises a security information interaction device 1 and a security information interaction terminal 2. Said security information interaction device 1 is used to execute the operations related to the transfer of the resource by means of performing the security information interaction with the security information interaction terminal 2 after establishing a physical connection with the security information interaction terminal 2. Said security information interaction terminal 2 is used to perform said security information interaction with said security information interaction device 1, and to complete the transfer of said resource based on the data element (i.e., the parameter) in one of a primary parameter set and at least one extended parameter set obtained from said security information interaction device 1.

As shown in FIG. 1, in the security information interaction system based on the extended parameter set disclosed in the present invention, said security information interaction device 1 further comprises a communication interface 3, a main controller 4, a primary parameter set storage module 5 and at least one extended parameter set storage module 6. Said communication interface 3 is used to establish said physical connection (i.e., a physical communication channel) with said security information interaction terminal 2. Said primary parameter set storage module 5 is used to store said primary parameter set. Said extended parameter set storage module 6 is used to store said at least one extended parameter set. Said main controller 4 is used to perform said security information interaction with said security information interaction terminal 2 via said communication interface 3 based on one of said primary parameter set and said extended parameter set, so as to execute the operations related to the transfer of said resource.

Preferably, in the security information interaction system based on the extended parameter set disclosed in the present invention, said security information interaction device 1 further comprises a configuration module 7 for updating said primary parameter set and/or said at least one extended parameter set based on the received configuration command.

Preferably, in the security information interaction system based on the extended parameter set disclosed in the present invention, said main controller 4 is also used to send a terminal data element request instruction to said security information interaction terminal 2 via said communication interface 3 after said communication interface 3 has established said physical connection with said security information interaction terminal 2.

Preferably, in the security information interaction system based on the extended parameter set disclosed in the present invention, said main controller 4 is also used to analyze a terminal data element request response so as to obtain at least one terminal data element related to the transfer of said resource (exemplarily, in the field of Financial IC cards, said at least one terminal data element includes the electronic cash indicator, the authorized amount and the transaction currency code) after receiving said terminal data element request response from said security information interaction terminal 2 via said communication interface 3, wherein said at least one terminal data element includes the data element associated with the attribute of said resource (exemplarily, in the field of Financial IC cards, said data element associated with the attribute of said resource is the transaction currency code).

Preferably, in the security information interaction system based on the extended parameter set disclosed in the present invention, said main controller 4 is also used to match said data element associated with the attribute of said resource with the corresponding data element (e.g. the first transaction currency code) in said primary parameter set read from said primary parameter set storage module 5, and if the both matches, then said main parameter set will be taken as the current working parameter set.

Preferably, in the security information interaction system based on the extended parameter set disclosed in the present invention, said main controller 4 is also used to match said data element associated with the attribute of said resource with the corresponding data elements (e.g. the second transaction currency code, and so on) in each of said at least one extended parameter set read from said extended parameter set storage module 6 successively if said data element associated with the attribute of said resource does not match with the corresponding data element in said primary parameter set read from said primary parameter set storage module 5, and if there exists a matched extended parameter set, then said matched extended parameter set will be taken as the current working parameter set.

Preferably, in the security information interaction system based on the extended parameter set disclosed in the present invention, said main controller 4 is also used to send an instruction indicating that the parameter matching operation fails to said security information interaction terminal 2 via said communication interface 3 when there exists no parameter set (including the primary parameter set and the extended parameter set) matching with said data element associated with the attribute of said resource.

Preferably, in the security information interaction system based on the extended parameter set disclosed in the present invention, said main controller 4 is also used to provide said security information interaction terminal 2 with the data element (i.e., the parameter, for example, electronic cash balances and the like) in said current working parameter set based on the instruction from said security information interaction terminal 2 in the subsequent security information interaction procedure after said current working parameter set is determined.

Preferably, in the security information interaction system based on the extended parameter set disclosed in the present invention, before said security information interaction device 1 is allowed to use, said primary parameter set and said extended parameter set are initialized by the manager (for example, the Financial IC card issuer) of said security information interaction device 1.

Preferably, in the security information interaction system based on the extended parameter set disclosed in the present invention, said physical connection is a non-contact physical connection and/or a contact physical connection.

Exemplarily, in the security information interaction system based on the extended parameter set disclosed in the present invention, said resource is the capital, and said data element associated with the attribute of said resource is the transaction currency code.

Exemplarily, in the security information interaction system based on the extended parameter set disclosed in the present invention, said security information interaction device 1 is a Financial IC card.

Exemplarily, in the security information interaction system based on the extended parameter set disclosed in the present invention, said security information interaction terminal 2 is a POS machine.

Preferably, in the security information interaction system based on the extended parameter set disclosed in the present invention, said security information interaction terminal 2 is further used to send said terminal data element request response to said security information interaction device 1 after receives said terminal data element request instruction from said security information interaction device 1.

Preferably, in the security information interaction system based on the extended parameter set disclosed in the present invention, said security information interaction terminal 2 is further used to obtain the data element (i.e., the parameter) from said current working parameter set by means of sending an instruction to said security information interaction device 1 after said security information interaction device 1 has determined said current working parameter set so as to complete the transfer of said resource.

Preferably, in the security information interaction system based on the extended parameter set disclosed in the present invention, upon receiving said instruction indicating that the parameter matching operation fails from said security information interaction device 1, said security information interaction terminal 2 terminates the security information interaction procedure.

Preferably, in the security information interaction system based on the extended parameter set disclosed in the present invention, said security information interaction terminal 2 is capable of acquiring the data element (for example, electronic cash balances) associated with the attribute of said resource in said primary parameter set and/or said at least one extended parameter set in the manner of sending an inquiry instruction to said security information interaction device 1.

Exemplarily, as mentioned before, in the existing technical solutions, multiple applications related to the transfer operation of various kinds of resource having different attributes are installed and carried in both the security information interaction devices and the security information interaction terminals, and thus the transfer operation of multiple kinds of resource having different attributes is realized, for example, in the financial field, the AIDs (the application identifiers) are used to uniquely identify different applications, therefore, the security information interaction terminal (such as the POS machine) and the security information interaction device (such as the IC card) usually require to load the applications represented by different AIDs (for example, security information interaction terminals of different countries need to load different AIDs, in order to select different parameter sets to operate for different currency codes), so that the security information interaction device can select different parameter sets to operate according to the AID of the security information interaction terminal (namely, different AIDs correspond to different parameter sets). However, since the AID resources are limited (for example, each currency cannot be matched with a corresponding AID), the above existing technical solutions cannot realize the flexible configuration and extension along with the continuous development of business type. While in the security information interaction system based on the extended parameter set disclosed in the present invention, the application identified by the same AID can utilize the primary parameter set and/or at least one extended parameter set (for example, the application identified by the same AID can select different parameter sets to operate for different currency codes), so the flexible configuration and extension can be achieved along with the continuous development of business type.

As shown in FIG. 1, the present invention also discloses a security information interaction device, wherein said security information interaction device comprises a communication interface, a main controller, a primary parameter set storage module and at least one extended parameter set storage module. Said communication interface is used to establish a physical connection (i.e., a physical communication channel) with a corresponding security information interaction terminal. Said primary parameter set storage module is used to store a primary parameter set. Said extended parameter set storage module is used to store said at least one extended parameter set. Said main controller is used to perform said security information interaction with said corresponding security information interaction terminal via said communication interface based on one of said primary parameter set and said extended parameter set, so as to execute the operation related to the transfer of said resource.

Preferably, the security information interaction device disclosed in the present invention further comprises a configuration module for updating said primary parameter set and/or said at least one extended parameter set based on the received configuration command.

Preferably, in the security information interaction device disclosed in the present invention, said main controller is also used to send a terminal data element request instruction to said security information interaction terminal via said communication interface after said communication interface has established said physical connection with said security information interaction terminal.

Preferably, in the security information interaction device disclosed in the present invention, said main controller is also used to analyze a terminal data element request response so as to obtain at least one terminal data element related to the transfer of said resource (exemplarily, in the field of Financial IC cards, said at least one terminal data element includes the electronic cash indicator, the authorized amount and the transaction currency code) after receiving said terminal data element request response from said security information interaction terminal via said communication interface, wherein said at least one terminal data element includes the data element associated with the attribute of said resource (exemplarily, in the field of Financial IC cards, said data element associated with the attribute of said resource is a transaction currency code).

Preferably, in the security information interaction device disclosed in the present invention, said main controller is also used to match said data element associated with the attribute of said resource with the corresponding data element (e.g. the first transaction currency code) in said primary parameter set read from said primary parameter set storage module, and if the both matches, then said main parameter set will be taken as the current working parameter set.

Preferably, in the security information interaction device disclosed in the present invention, said main controller is also used to match said data element associated with the attribute of said resource with the corresponding data elements (e.g. the second transaction currency code, and so on) in each of said at least one extended parameter set read from said extended parameter set storage module successively if said data element associated with the attribute of said resource does not match with the corresponding data element in said primary parameter set read from said primary parameter set storage module, and if there exists a matched extended parameter set, then said matched extended parameter set will be taken as the current working parameter set.

Preferably, in the security information interaction device disclosed in the present invention, said main controller is also used to send an instruction indicating that the parameter matching operation fails to said security information interaction terminal via said communication interface when there exists no parameter set (including the primary parameter set and the extended parameter set) matching with said data element associated with the attribute of said resource.

Preferably, in the security information interaction device disclosed in the present invention, said main controller is also used to provide said security information interaction terminal with the data element (i.e., the parameter, for example, electronic cash balances and the like) in said current working parameter set based on the instruction from said security information interaction terminal in the subsequent security information interaction procedure after said current working parameter set is determined.

Preferably, in the security information interaction device disclosed in the present invention, before said security information interaction device is allowed to use, said primary parameter set and said extended parameter set are initialized by the manager (for example, the Financial IC card issuer) of said security information interaction device.

Preferably, said physical connection is a non-contact physical connection and/or a contact physical connection.

Exemplarily, in the security information interaction device disclosed in the present invention, said resource is the capital, and said data element associated with the attribute of said resource is the transaction currency code.

Exemplarily, the security information interaction device disclosed in the present invention is a Financial IC card.

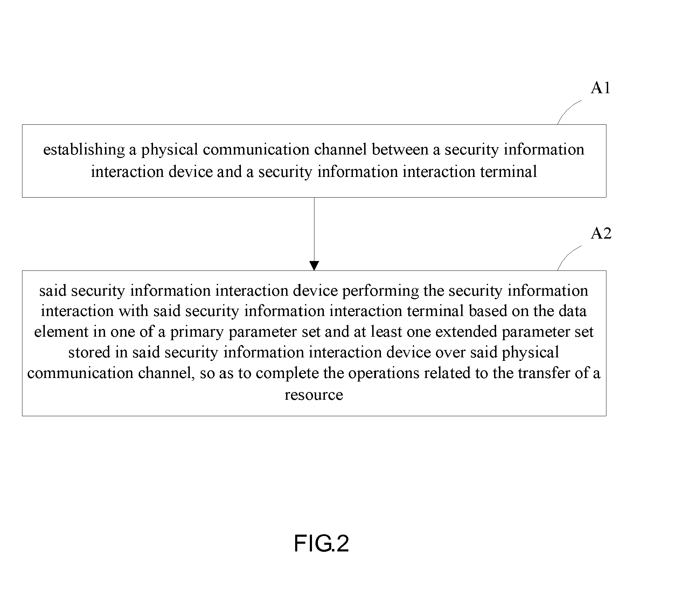

FIG. 2 is the flow diagram of the security information interaction method based on the extended parameter set according to the embodiment of the present invention. As shown in FIG. 2, the security information interaction method based on the extended parameter set disclosed in the present invention comprises the following steps: (A1) establishing a physical communication channel between a security information interaction device and a security information interaction terminal; and (A2) said security information interaction device performing the security information interaction with said security information interaction terminal based on the data element in one of a primary parameter set and at least one extended parameter set stored in said security information interaction device over said physical communication channel, so as to complete the operation related to the transfer of the resource.

Preferably, in the security information interaction method based on the extended parameter set disclosed in the present invention, said primary parameter set and/or said at least one extended parameter set are capable of being updated based on the received configuration command.

Preferably, in the security information interaction method based on the extended parameter set disclosed in the present invention, said step (A2) further comprises: said security information interaction device sending a terminal data element request instruction to said security information interaction terminal.

Preferably, in the security information interaction method based on the extended parameter set disclosed in the present invention, said step (A2) further comprises: said security information interaction device analyzing a terminal data element request response so as to obtain at least one terminal data element related to the transfer of said resource (exemplarily, in the field of Financial IC cards, said at least one terminal data element includes the electronic cash indicator, the authorized amount and the transaction currency code) after receiving said terminal data element request response from said security information interaction terminal, wherein said at least one terminal data element including the data element associated with the attribute of said resource (exemplarily, in the field of Financial IC cards, said data element associated with the attribute of said resource is a transaction currency code).

Preferably, in the security information interaction method based on the extended parameter set disclosed in the present invention, said step (A2) further comprises: said security information interaction device matching said data element associated with the attribute of said resource with the corresponding data element (e.g. the first transaction currency code) in said primary parameter set, and if the both matches, then said main parameter set will be taken as the current working parameter set.

Preferably, in the security information interaction method based on the extended parameter set disclosed in the present invention, said step (A2) further comprises: matching said data element associated with the attribute of said resource with the corresponding data elements (e.g. the second transaction currency code, and so on) in each of said at least one extended parameter set successively if said data element associated with the attribute of said resource does not match with the corresponding data element in said primary parameter set, and if there exists a matched extended parameter set, then said matched extended parameter set will be taken as the current working parameter set.

Preferably, in the security information interaction method based on the extended parameter set disclosed in the present invention, said step (A2) further comprises: said security information interaction device sending an instruction indicating that the parameter matching operation fails to said security information interaction terminal when there exists no parameter set (including the primary parameter set and the extended parameter set) matching with said data element associated with the attribute of said resource.

Preferably, in the security information interaction method based on the extended parameter set disclosed in the present invention, said step (A2) further comprises: said security information interaction device providing said security information interaction terminal with the data element (i.e., the parameter, for example, electronic cash balances and the like) in said current working parameter set based on the instruction from said security information interaction terminal in the subsequent security information interaction procedure after said current working parameter set is determined.

Preferably, in the security information interaction method based on the extended parameter set disclosed in the present invention, before said security information interaction device is allowed to use, said primary parameter set and said extended parameter set are initialized by the manager (for example, the Financial IC card issuer) of said security information interaction device 1.

Preferably, in the security information interaction method based on the extended parameter set disclosed in the present invention, said physical communication channel is a non-contact physical communication channel and/or a contact physical communication channel.

Exemplarily, in the security information interaction method based on the extended parameter set disclosed in the present invention, said resource is the capital, and said data element associated with the attribute of said resource is the transaction currency code.

Exemplarily, in the security information interaction method based on the extended parameter set disclosed in the present invention, said security information interaction device is a Financial IC card. Exemplarily, in the security information interaction method based on the extended parameter set disclosed in the present invention, said security information interaction terminal is a POS machine.

Preferably, in the security information interaction method based on the extended parameter set disclosed in the present invention, said step (A2) further comprises: said security information interaction terminal sending said terminal data element request response to said security information interaction device after receiving said terminal data element request instruction from said security information interaction device.

Preferably, in the security information interaction method based on the extended parameter set disclosed in the present invention, said step (A2) further comprises: said security information interaction terminal obtaining the data element (i.e., the parameter) from said current working parameter set by means of sending the instruction to said security information interaction device after said security information interaction device has determined said current working parameter set so as to complete the transfer of said resource.

Preferably, in the security information interaction method based on the extended parameter set disclosed in the present invention, said step (A2) further comprises: upon receiving said instruction indicating that the parameter matching operation fails from said security information interaction device, said security information interaction terminal terminates the security information interaction procedure.

Preferably, in the security information interaction method based on the extended parameter set disclosed in the present invention, said security information interaction terminal is capable of acquiring the data element (for example, electronic cash balances) associated with the attribute of said resource in said primary parameter set and/or said at least one extended parameter set in the manner of sending an inquiry instruction to said security information interaction device.

Although the present invention is described by way of the preferred embodiments mentioned above, but its realization is not limited to aforementioned embodiments. It should be recognized that various changes and modifications can be made to the present invention by one skilled in the art without departing from the spirit and scope of the invention.

## Claims

1. A security information interaction system based on the extended parameter set, said security information interaction system based on the extended parameter set comprising:
a security information interaction device for executing the operations related to the transfer of a resource by means of performing the security information interaction with a security information interaction terminal after establishing a physical connection with the security information interaction terminal; and
a security information interaction terminal for performing said security information interaction with said security information interaction device, and completing the transfer of said resource based on the data elements in one of a primary parameter set and at least one extended parameter set obtained from said security information interaction device.

2. The security information interaction system based on the extended parameter set as claimed in claim 1, **characterized in that**, said security information interaction device further comprises:
a communication interface for establishing said physical connection with said security information interaction terminal;
a primary parameter set storage module for storing said primary parameter set;
an extended parameter set storage module for storing said at least one extended parameter set; and
a main controller for performing said security information interaction with said security information interaction terminal via said communication interface based on one of said primary parameter set and said extended parameter set, so as to executing the operations related to the transfer of said resource.

3. The security information interaction system based on the extended parameter set as claimed in claim 2, **characterized in that**, said security information interaction device further comprises a configuration module for updating said primary parameter set and/or said at least one extended parameter set based on the received configuration command.

4. The security information interaction system based on the extended parameter set as claimed in claim 3, **characterized in that**, said main controller is also used for sending a terminal data element request instruction to said security information interaction terminal via said communication interface after said communication interface has established said physical connection with said security information interaction terminal

5. The security information interaction system based on the extended parameter set as claimed in claim 4, **characterized in that**, said main controller is also used for analyzing a terminal data element request response so as to obtain at least one terminal data element related to the transfer of said resource after receiving said terminal data element request response from said security information interaction terminal via said communication interface, wherein said at least one terminal data element includes the data element associated with the attribute of said resource.

6. The security information interaction system based on the extended parameter set as claimed in claim 5, **characterized in that**, said main controller is also used for matching said data element associated with the attribute of said resource with the corresponding data element in said primary parameter set read from said primary parameter set storage module, and if the both matches, then said main parameter set will be taken as the current working parameter set.

7. The security information interaction system based on the extended parameter set as claimed in claim 6, **characterized in that**, said main controller is also used for matching said data element associated with the attribute of said resource with the corresponding data elements in each of at least one extended parameter set read from said extended parameter set storage module successively if said data element associated with the attribute of said resource does not match with the corresponding data element in said primary parameter set read from said primary parameter set storage module, and if there exists a matched extended parameter set, then said matched extended parameter set will be taken as the current working parameter set.

8. The security information interaction system based on the extended parameter set as claimed in claim 7, **characterized in that**, said main controller is also used for sending an instruction indicating that the parameter matching operation fails to said security information interaction terminal via said communication interface when there exists no parameter set matching with said data element associated with the attribute of said resource.

9. The security information interaction system based on the extended parameter set as claimed in claim 8, **characterized in that**, said main controller is also used for providing said security information interaction terminal with the data element in said current working parameter set based on the instruction from said security information interaction terminal in the subsequent security information interaction procedure after said current working parameter set is determined.

10. The security information interaction system based on the extended parameter set as claimed in claim 9, **characterized in that**, before said security information interaction device is allowed to use, said primary parameter set and said extended parameter set are initialized by the manager of said security information interaction device.

11. The security information interaction system based on the extended parameter set as claimed in claim 10, **characterized in that**, said physical connection is a non-contact physical connection and/or a contact physical connection.

12. The security information interaction system based on the extended parameter set as claimed in claim 11, **characterized in that**, said resource is the capital, and said data element associated with the attribute of said resource is the transaction currency code.

13. The security information interaction system based on the extended parameter set as claimed in claim 12, **characterized in that**, said security information interaction device is a Financial IC card.

14. The security information interaction system based on the extended parameter set as claimed in claim 13, **characterized in that**, said security information interaction terminal is a POS machine.

15. The security information interaction system based on the extended parameter set as claimed in claim 14, **characterized in that**, said security information interaction terminal is further used for sending said terminal data element request response to said security information interaction device after receiving said terminal data element request instruction from said security information interaction device.

16. The security information interaction system based on the extended parameter set as claimed in claim 15, **characterized in that**, said security information interaction terminal is further used for obtaining the data element from said current working parameter set by means of sending the instruction to said security information interaction device after said security information interaction device has determined said current working parameter set so as to complete the transfer of said resource.

17. The security information interaction system based on the extended parameter set as claimed in claim 16, **characterized in that**, upon receiving said instruction indicating that the parameter matching operation fails from said security information interaction device, said security information interaction terminal terminates the security information interaction procedure.

18. The security information interaction system based on the extended parameter set as claimed in claim 17, **characterized in that**, said security information interaction terminal is capable of acquiring the data element associated with the attribute of said resource in said primary parameter set and/or said at least one extended parameter set in the manner of sending an inquiry instruction to said security information interaction device.

19. A security information interaction device, said security information interaction device comprising:
a communication interface for establishing a physical connection with a corresponding security information interaction terminal;
a primary parameter set storage module for storing a primary parameter set;
an extended parameter set storage module for storing at least one extended parameter set; and
a main controller for performing a security information interaction with said corresponding security information interaction terminal via said communication interface based on one of said primary parameter set and said extended parameter set, so as to execute the operations related to the transfer of the resource.

20. The security information interaction device as claimed in claim 19, **characterized in that**, said security information interaction device further comprises a configuration module for updating said primary parameter set and/or said at least one extended parameter set based on the received configuration command.

21. The security information interaction device as claimed in claim 20, **characterized in that**, said main controller is also used for sending a terminal data element request instruction to said security information interaction terminal via said communication interface after said communication interface has established said physical connection with said security information interaction terminal.

22. The security information interaction device as claimed in claim 21, **characterized in that**, said main controller is also used for analyzing a terminal data element request response so as to obtain at least one terminal data element related to the transfer of said resource after receiving said terminal data element request response from said security information interaction terminal via said communication interface, wherein said at least one terminal data element includes the data element associated with the attribute of said resource.

23. The security information interaction device as claimed in claim 22, **characterized in that**, said main controller is also used for matching said data element associated with the attribute of said resource with the corresponding data element in said primary parameter set read from said primary parameter set storage module, and if the both matches, then said main parameter set will be taken as the current working parameter set.

24. The security information interaction device as claimed in claim 23, **characterized in that**, said main controller is also used for matching said data element associated with the attribute of said resource with the corresponding data elements in each of at least one extended parameter set read from said extended parameter set storage module successively if said data element associated with the attribute of said resource does not match with the corresponding data element in said primary parameter set read from said primary parameter set storage module, and if there exists a matched extended parameter set, then said matched extended parameter set will be taken as the current working parameter set.

25. The security information interaction device as claimed in claim 24, **characterized in that**, said main controller is also used for sending an instruction indicating that the parameter matching operation fails to said security information interaction terminal via said communication interface when there exists no parameter set matching with said data element associated with the attribute of said resource.

26. The security information interaction device as claimed in claim 25, **characterized in that**, said main controller is also used for providing said security information interaction terminal with the data element in said current working parameter set based on the instruction from said security information interaction terminal in the subsequent security information interaction procedure after said current working parameter set is determined.

27. The security information interaction device as claimed in claim 26, **characterized in that**, said primary parameter set and said extended parameter set are initialized by the manager of said security information interaction device.

28. The security information interaction device as claimed in claim 27, **characterized in that**, said physical connection is a non-contact physical connection or a contact physical connection.

29. The security information interaction device as claimed in claim 28, **characterized in that**, said resource is the capital, and said data element associated with the attribute of said resource is a transaction currency code.

30. The security information interaction device as claimed in claim 29, **characterized in that**, said security information interaction device is a Financial IC card.

31. A security information interaction method based on the extended parameter set, said security information interaction method based on the extended parameter set comprising the following steps:
(A1) establishing a physical communication channel between a security information interaction device and a security information interaction terminal; and
(A2) said security information interaction device performing the security information interaction with said security information interaction terminal based on the data element in one of a primary parameter set and at least one extended parameter set stored in said security information interaction device over said physical communication channel, so as to complete the operations related to the transfer of a resource.

32. The security information interaction method based on the extended parameter set as claimed in claim 31, **characterized in that**, said primary parameter set and/or said at least one extended parameter set are capable of being updated based on the received configuration command.

33. The security information interaction method based on the extended parameter set as claimed in claim 32, **characterized in that**, before said security information interaction device is allowed to use, said primary parameter set and said extended parameter set are initialized by the manager of said security information interaction device.

34. The security information interaction method based on the extended parameter set as claimed in claim 33, **characterized in that**, said security information interaction terminal is capable of acquiring the data element associated with the attribute of said resource in said primary parameter set and/or said at least one extended parameter set in the manner of sending an inquiry instruction to said security information interaction device.
